# EUROPEAN PATENT APPLICATION

(11) **EP 4 040 652 A1**
(43) Date of publication of application: **10.08.2022**
(21) Application number: 21186167.9
(22) Date of filing: 16.07.2021
(51) Int. Cl.: H02K 15/00, B29C 45/14, H02K 3/50, B29L 31/36, B29L 31/00

(54) **POSITIONING MECHANISM AND INJECTION MOLD**

(30) Priority: 05.02.2021 CN 202110163388
(71) Applicant: Shenzhen Kaizhong Precision Technology Co., Ltd., Pingshan District Shenzhen Guangdong 518118 (CN)
(72) Inventor: HE, Xiaohua, Shenzhen, 518118 (CN); CHEN, Feng, Shenzhen, 518118 (CN); CHENG, Zhengzhong, Shenzhen, 518118 (CN)
(74) Representative: Frick, Robert

(57) **Abstract**

The present invention relates to the technical field of automobiles, in particular to an armour clamp positioning mechanism for positioning an armour clamp that comprises at least two layers of armour clamp main bodies arranged at intervals; which comprises at least three positioning assemblies, comprising a first positioning assembly, a second positioning assembly, and a third positioning assembly; wherein, the first positioning assembly comprises a first section and a second section; the first section is arranged to penetrate through the armour clamp main body on the first layer and abut against a top wall of the armour clamp main body on the second layer, and the second section is arranged to abut against a bottom wall of the armour clamp main body on the second layer; the second positioning assembly comprises a third section and a fourth section; the third section is arranged to abut against a top wall of the armour clamp main body on the first layer, and the fourth section is arranged to penetrate through the armour clamp main body on the second layer and abut against a bottom wall of the armour clamp main body on the first layer; and the third positioning assembly is arranged to penetrate through the armour clamp main body on the first layer and the armour clamp main body on the second layer. This armour clamp positioning mechanism can be used to effectively position, allow the armour powder of the armour clamp not to be easily scraped off, can effectively pass the insulation test and improve the yield of products.

## Description

### Technical Field

The present invention relates to the technical field of automobiles, in particular to an armour clamp positioning mechanism and injection mold.

### Background

The connector is widely used in motors, which is mainly composed of armour clamps and plastics. The connector bridges a communication between blocked or isolated circuits in the circuit, thereby allowing current/signals to flow and the circuit to perform a predetermined function. In the production process of the connector, the armour clamp is placed into a plastic mold as an insert, and then raw plastic materials are injected into the mold to complete injection molding of the connector; wherein, one part of the armour clamp is designed in the plastic, and the other part is exposed outside for connecting the conducting wire; the plastic is used for fixing and covering the armour clamp, so that the armour clamps are arranged according to the required positions and intervals, and the insulation between the armour clamps is ensured.

When the armour clamp is injected, firstly, a plurality of circles are utilized to position the armour clamp main body, and at least two protrusions with different sizes are arranged at intervals along the axial direction of a round needle, and then the armour clamp main body on the first layer is sleeved on the round needle and clamped on the protrusion with the largest size; then, the armour clamp main body on the second layer are sleeved on the protrusion with relatively small upper size, in this way, at least two layers of armour clamp main bodies are overlapped, and as the thickness of the armour clamp is required, at most five layers of armour clamp main bodies are overlapped.

However, in the prior art, since the positioning hole in the armour clamp main body is small, it is difficult to observe with the naked eye, when the armour clamp main body is installed on the round needle, the protrusion or the step surface on the round needle can scratch the hole wall of the positioning hole in the armour clamp main body, so that the armour powder is scraped, and the scraped armour powder adheres to the armour clamp main body or drops into the mold; during the injection molding of the armour clamp, it will be incorporated into the rubber and mixed with the rubber, after the production is completed, the armour clamp mixed with armour powder will be electrically conductive during the insulation test, thereby reducing the yield of the product.

### Summary of the Invention

Therefore, the technical problem to be solved by the present invention is how to overcome the defect in the prior art that the armour powder of the armour clamp is scraped off when the armour clamp is positioned, so as to provide an armour clamp positioning mechanism and injection mold, which can be used to effectively position, allow the armour powder of the armour clamp not to be easily scraped off, can effectively pass the insulation test and improve the yield of products.

In order to solve the above technical problem, the invention provides an armour clamp positioning mechanism for positioning an armour clamp that comprises at least two layers of armour clamp main bodies arranged at intervals; further comprising: at least three positioning assemblies comprising a first positioning assembly, a second positioning assembly, and a third positioning assembly; the first positioning assembly comprises a first section and a second section; the first section is arranged to penetrate through the armour clamp main body on the first layer and abut against a top wall of the armour clamp main body on the second layer, and the second section is arranged to abut against a bottom wall of the armour clamp main body on the second layer; the second positioning assembly comprises a third section and a fourth section; the third section is arranged to abut against a top wall of the +armour clamp main body on the first layer, and the fourth section is arranged to penetrate through the armour clamp main body on the second layer and abut against a bottom wall of the armour clamp main body on the first layer; and the third positioning assembly is arranged to penetrate through the armour clamp main body on the first layer and the armour clamp main body on the second layer.

Alternatively, the first section and the second section are located on the same axis, and the third section and the fourth section are located on the same axis.

Alternatively, a plurality of positioning assemblies are arranged at intervals along a circumferential direction of the armour clamp main bodies.

Alternatively, the three positioning assemblies are in the form of cylinder.

Alternatively, the cylinder comprises: a body arranged on a plate body assembly; an insertion part arranged at one end of the body far away from the plate body assembly, and the insertion part has a diameter less than that of the body.

Alternatively, an end of the insertion part is arranged with a chamfer.

Alternatively, the armour clamp further comprises an armour clamp main body on a third layer; the armour clamp positioning mechanism comprises four positioning assemblies, the third positioning assembly comprises a fifth section and a sixth section, the fifth section is arranged to abut against the top wall of the armour clamp main body on the first layer , the sixth section is arranged to penetrate through the armour clamp main body on the second layer and the armour clamp main body on the third layer and abut against the bottom wall of the armour clamp main body on the first layer. A fourth positioning assembly is arranged to penetrate through the armour clamp main body on the first layer, the armour clamp main body on the second layer and the armour clamp main body on the third layer.

The invention also provides an injection mold, which comprises the armour clamp positioning mechanism of the present invention.

Alternatively, it further comprises a plate body assembly that comprises: a first plate body, having a first section, a third section and a fifth section arranged thereon and fixedly connected thereto; a second plate body, having a second section, a fourth section and a sixth section arranged thereon and fixedly connected thereto.

the technical solution of the present invention has the following advantages:
1. the armour clamp positioning mechanism provided by the present invention is used for positioning an armour clamp that comprises at least two layers of armour clamp main bodies arranged at intervals; further comprising: at least three positioning assemblies, comprising a first positioning assembly, a second positioning assembly, and a third positioning assembly; the first positioning assembly comprises a first section and a second section; the first section is arranged to penetrate through the armour clamp main body on the first layer and abut against a top wall of the armour clamp main body on the second layer, and the second section is arranged to abut against a bottom wall of the armour clamp main body on the second layer; the second positioning assembly comprises a third section and a fourth section; the third section is arranged to abut against a top wall of the armour clamp main body on the first layer, and the fourth section is arranged to penetrate through the armour clamp main body on the second layer and abut against a bottom wall of the armour clamp main body on the first layer; and the third positioning assembly is arranged to penetrate through the armour clamp main body on the first layer and the armour clamp main body on the second layer.
   By arranging two positioning assemblies on the base, the two positioning assemblies are fixedly connected to the base; and the positioning hole is provided on the armour clamp, the first positioning assembly fixes the armour clamp main body on the first layer through the positioning hole; the second positioning assembly fixes the armour clamp main body on the second layer through the positioning hole, so that the positions of the armour clamp main body on the first layer and the armour clamp main body on the second layer are determined; by fixing the armour clamp main body on the first layer on the first positioning assembly, and fixing the armour clamp main body on the second layer on the second positioning assembly, at least two protrusions with different sizes are prevented from being arranged at intervals along the axial direction of one positioning assembly; when the armour clamp main body on the first layer and the armour clamp main body on the second layer are respectively installed on the positioning assembly, there is a scratching between the positioning hole and the protrusion, and the armour powder in the positioning hole of the armour clamp is scratched off, so that when the armour clamp is encapsulated, that is, when the armour clamp is injection molded, no armour powder drops into the rubber, that is, the armour powder will not be mixed with the rubber,. when the armour clamp is subjected to the insulation test, the condition of electric conduction will not occur, so that the reject ratio of products is reduced, and the yield of the products is improved.
   When positioning, firstly, the first section of the first positioning assembly penetrates through the armour clamp main body on the first layer from top to bottom, and the end of the first section is arranged to abut against the top wall of the armour clamp main body on the second layer for positioning and fixing; then, the second section is arranged to abut against the bottom wall of the armour clamp main body on the second layer; then, the end of the third section of the second positioning assembly is arranged to abut against the top wall of the armour clamp main body on the first layer, then the fourth section is arranged to penetrate through the armour clamp main body on the second layer from bottom to top, and the end of the fourth section is arranged to abut against the bottom wall of the armour clamp main body on the first layer for positioning and fixing; finally, a third positioning assembly is arranged to penetrate through the armour clamp main body on the first layer and the armour clamp main body on the second layer together, so as to limit the armour clamp main body on the first layer and the armour clamp main body on the second layer to the directions of six freedoms, i.e., the armour clamp main body on the first layer and the armour clamp main body on the second layer are limited to move and rotate on the X axis, Y axis and Z axis respectively; By providing limitation to the armour clamp in this way, the stability of positioning of the armour clamp can be ensured, and meanwhile, it helps to avoid the fact in the prior art that the armour powder in the positioning hole of the armour clamp main body will be scraped off, due to the scraping between the positioning hole of the armour clamp main body and the protrusion, when at least two protrusions with different sizes are arranged at intervals along the axial direction of one positioning assembly, and the armour clamp main body on the first layer and the armour clamp main body on the second layer are respectively mounted on the positioning assembly with protrusions, so that when the armour clamp is encapsulated, that is, when the armour clamp is injection molded, no armour powder drops into the rubber, that is, the armour powder will not be mixed with the rubber,. when the armour clamp is subjected to the insulation test, the phenomenon of electric conduction will not occur, so that the reject ratio of products is reduced, and the yield of the products is improved. Meanwhile, the collapse of the armour clamp main body on the first layer and the armour clamp main body on the second layer during the injection molding process is also avoided.
2. According to the armour clamp positioning mechanism provided by the invention, the first section and the second section are located on the same axis, and the third section and the fourth section are located on the same axis, the coaxiality of the armour clamp main body on the first layer and the armour clamp main body on the second layer after being positioned is ensured, so that the positioning precision is ensured, and the positioning deviation is avoided.
3. The armour clamp positioning mechanism provided by the invention is provided with a plurality of positioning assemblies at intervals along a circumferential direction of the armour clamp main bodies; therefore, the armour clamp main body can be positioned in all directions of the armour clamp main body, so that the positioning precision and the positioning stability are ensured.
4. The armour clamp positioning mechanism provided by the invention, wherein the cylinder comprises a body arranged on a plate body assembly; an insertion part arranged at one end of the body far away from the plate body assembly, and the insertion part has a diameter less than that of the body; setting the diameter of the insertion part to be smaller than the diameter of the body can ensure that the cylinder can be smoothly inserted into the positioning hole of the armour clamp main body, meanwhile, a gap is also left for the cylinder to be inserted into the armour clamp main body to avoid scratching between the insertion part of the cylinder and the positioning hole of the armour clamp main body, so as to avoid the armour powder on the armour clamp main body of being scraped off.

### Brief Description of the Drawings

In order to more clearly illustrate the embodiments of the present invention or the technical solutions in the prior art, the accompanying drawings used in describing the embodiments or the prior art will be briefly introduced below, and apparently, the accompanying drawings mentioned in the following description are just some embodiments of the present invention, and other drawings can be derived by a person skilled in the art from these drawings without expenditure of creative efforts.
FIG. 1 is a schematic structural view of the armour clamp positioning mechanism provided in the present invention;
FIG. 2 is a cross-sectional view of FIG. 1;
FIG. 3 is a structural schematic of the injection mold.

1- the first positioning assembly; 11- the first section; 12- the second section; 13- the plastic part; 2- the second positioning assembly; 21- the third section; 22- the fourth section; 3- the third positioning assembly; 31- the fifth section; 32- the sixth section; 4- the fourth positioning assembly; 5- the armour clamp main body on the first layer; 6- the armour clamp main body on the second layer; 7- the armour clamp main body on the third layer; 8-the body; 81-the insertion part; 9-the plate body assembly; 91-the first plate body; 92-the second plate body; 10-ejector rob.

### Detailed Description of Embodiments

The technical solutions of the present invention will be clearly and completely described below with reference to the accompanying drawings, and it should be understood that the described embodiments are only a part of, but not all of, the embodiments of the present application. Based on the embodiments in the present invention, all other embodiments obtained by those skilled in the art without expenditure of creative efforts belong to the protection scope of the present invention.

In the description of the present utility model, it should be noted that the terms "center", "upper", "lower", "left", "right", "vertical", "horizontal", "inner", "outer", and the like indicate orientations or positional relationships based on orientations or positional relationships shown in the drawings, and are only for convenience of description of the present utility model and simplification of description, but do not indicate or imply that the device or element referred to must have a specific orientation, be constructed and operated in a specific orientation, and thus, should not be construed as limiting the present invention. Furthermore, the terms "first", "second" and "third" are used for descriptive purposes only and are not to be construed as indicating or implying relative importance.

In the description of the present utility model, it should be noted that, unless otherwise explicitly specified or limited, the terms "install", "link" and "connect" are to be construed broadly, and may be, for example, fixedly connect, detachably connect, or integrally connect; may be mechanically or electrically connect; they may be connected directly or indirectly through intervening media, or they may be interconnected between two elements. The specific meaning of the above terms in the present utility model can be understood as a specific case by those skilled in the art.

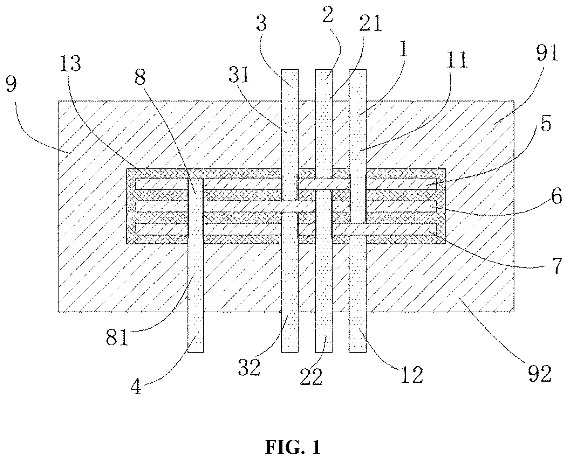

Referring to FIGs. 1 to 3, the present invention provides an armour clamp positioning mechanism for positioning an armour clamp, wherein the armour clamp positioning mechanism is arranged in a mold, so as to facilitate direct injection molding after the armour clamp is positioned. The mold is provided with a first plate body and a second plate body, wherein the first plate body is an upper mold plate of the mold, the second plate body is a lower mold plate of the mold, and the positioning assembly is arranged on the first plate body and the second plate body. Wherein the armour clamp comprises at least two layers of armour clamp main bodies arranged at intervals; further comprising: at least three positioning assemblies, comprising a first positioning assembly 1, a second positioning assembly 2, and a third positioning assembly 3; wherein, the first positioning assembly 1 comprises a first section 11 and a second section 12; the first section 11 is arranged to penetrate through the armour clamp main body 5 on the first layer and abut against a top wall of the armour clamp main body 6 on the second layer, and the second section 12 is arranged to abut against a bottom wall of the armour clamp main body 6 on the second layer; the second positioning assembly 2 comprises a third section 21 and a fourth section 22; the third section 21 is arranged to abut against a top wall of the armour clamp main body 5 on the first layer, and the fourth section 22 is arranged to penetrate through the armour clamp main body 6 on the second layer and abut against a bottom wall of the armour clamp main body 5 on the first layer; and the third positioning assembly 3 is arranged to penetrate through the armour clamp main body 5 on the first layer and the armour clamp main body 6 on the second layer.

Wherein the armour clamp main body on each layer is C-shaped, when positioning the armour clamp main body 5 on the first layer and the armour clamp main body 6 on the second layer, the armour clamp main bodies on the two layers can be enclosed to form an annular structure, and then positioning is carried out. In the present embodiment, the armour clamp main bodies on the two layers are arranged at intervals along the vertical direction, and a plastic part 13 is injection molded outside the armour clamp main body 5 on the first layer and the armour clamp main body 6 on the second layer. A positioning hole is arranged on the armour clamp main body, when positioning, the first section 11 of the first positioning assembly 1 penetrates through the armour clamp main body 5 on the first layer from top to bottom, and the end of the first section 11 is arranged to abut against the top wall of the armour clamp main body 6 on the second layer for positioning and fixing; then, the second section 12 is is arranged to abut against the bottom wall of the armour clamp main body 6 on the second layer; then, the end of the third section 21 of the second positioning assembly 2 is arranged to abut against the top wall of the armour clamp main body 5 on the first layer, then the fourth section 22 is arranged to penetrate through the armour clamp main body 6 on the second layer from bottom to top, and the end of the fourth section 22 is arranged to abut against the bottom wall of the armour clamp main body 5 on the first layer for positioning and fixing; finally, a third positioning assembly 3 is arranged to penetrate through the armour clamp main body 5 on the first layer and the armour clamp main body 6 on the second layer together, so that the armour clamp main body 5 on the first layer and the armour clamp main body 6 on the second layer are limited to the directions of six freedoms, namely, the armour clamp main body 5 on the first layer and the armour clamp main body 6 on the second layer are limited to move and rotate on the X axis, Y axis and Z axis respectively; providing limintation to the armour clamp in this way ensures the stability of positioning of the armour clamp, and meanwhile, it helps to avoid the fact in the prior art that the armour powder in the positioning hole of the armour clamp main body will be scraped off, due to the scraping between the positioning hole of the armour clamp main body and the protrusion, when at least two protrusions with different sizes are arranged at intervals along the axial direction of one positioning assembly, and the armour clamp main body on the first layer and the armour clamp main body on the second layer are respectively mounted on the positioning assembly with protrusions, so that when the armour clamp is encapsulated, that is, when the armour clamp is injection molded, no armour powder drops into the rubber, that is, the armour powder will not be mixed with the rubber,. when the armour clamp is subjected to the insulation test, the phenomenon of electric conduction will not occur, so that the reject ratio of products is reduced, and the yield of the products is improved. Meanwhile, the collapse of the armour clamp main body on the first layer and the armour clamp main body on the second layer during the injection molding process is also avoided.

Furthermore, the first section 11 and the second section 12 are located on the same axis, and the third section 21 and the fourth section 22 are located on the same axis, the coaxiality of the armour clamp main body 5 on the first layer and the armour clamp main body 6 on the second layer after being positioned is ensured, so that the positioning precision is ensured, and the positioning deviation is avoided.

In the present embodiment, a plurality of positioning assemblies may be arranged at intervals along a circumferential direction of the armour clamp main bodies; therefore, the armour clamp main body can be positioned in all directions of the armour clamp main body, so that the positioning precision and the positioning stability are ensured.

Furthermore, the three positioning assemblies are in the form of cylinder; specifically, the cylinder comprises a body 8 arranged on a plate body assembly; an insertion part 81 arranged at one end of the body 8 far away from the plate body assembly, and the insertion part 81 has a diameter less than that of the body 8; setting the diameter of the insertion part 81 to be smaller than the diameter of the body 8 can ensure that the cylinder can be smoothly inserted into the positioning hole of the armour clamp main body, meanwhile, a gap is also left for the cylinder to be inserted into the armour clamp main body to avoid scratching between the insertion part of the cylinder and the positioning hole of the armour clamp main body, so as to avoid the armour powder on the armour clamp main body of being scraped off.

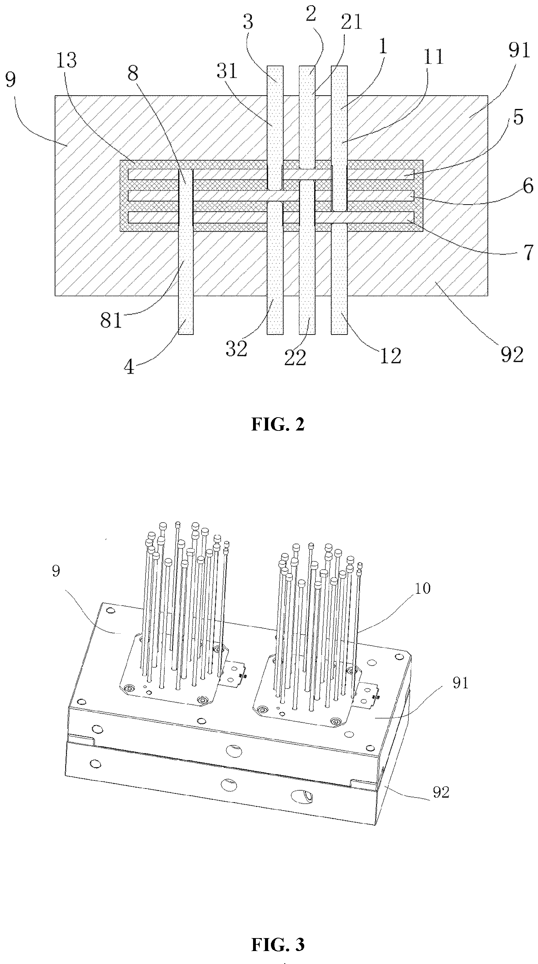

Referring to FIG. 2, the end of the insertion part 81 is arranged with a chamfer, firstly, the burrs at the end of the insertion part are removed, making the cylinder more beautiful, and meanwhile, it is also convenient for the insertion part to be quickly inserted into the positioning hole of the armour clamp body.

When the armour clamp futher comprises an armour clamp main body 7 on a third layer, the armour clamp positioning mechanism comprises four positioning assemblies, the third positioning assembly 3 comprises a fifth section 31 and a sixth section 32, the fifth section 31 is arranged to abut against the top wall of the armour clamp main body 5 on the first layer , the sixth section 32 is arranged to penetrate through the armour clamp main body 6 on the second layer and the armour clamp main body 7 on the third layer and abut against the bottom wall of the armour clamp main body 5 on the first layer; a fourth positioning assembly 4 is arranged to penetrate through the armour clamp main body 5 on the first layer, the armour clamp main body 6 on the second layer and the armour clamp main body 7 on the third layer.

When the armour clamp main bodies on three layers is positioned, firstly, the first section 1 of the first positioning assembly 11 is arranged to penetrate through the armour clamp main body 5 on the first layer and the armour clamp main body 6 on the second layer from top to bottom, and the end of the first section 11 is arranged to abut against the top wall of the armour clamp main body 7 on the third layer; then, the second section 12 is is arranged to abut against the bottom wall of the armour clamp main body 7 on the third layer; then, the end of the third section 21 of the second positioning assembly 2 is arranged to penetrate through the armour clamp main body 5 on the first layer, and abut against the top wall of the armour clamp main body 6 on the second layer, then the fourth section 22 is arranged to penetrate through the armour clamp main body 7 on the third layer from bottom to top, and the end of the fourth section 22 is arranged to abut against the bottom wall of the armour clamp main body 6 on the second layer; then, the end of the fifth section 31 of the third positioning assembly 3 is arranged to abut against the top wall of the armour clamp main body 5 on the first layer, then, the sixth section 32 is arranged to penetrate through the armour clamp main body 7 on the third layer and the armour clamp main body 6 on the second layer from bottom to top, and the end of the sixth section 32 is arranged to abut against the bottom wall of the armour clamp main body 5 on the first layer for positioning and fixing; finally, the fourth positioning assembly is arranged to penetrate through the armour clamp main body 5 on the first layer, the armour clamp main body 6 on the second layer and the armour clamp main body 7 on the third layer together, so that the armour clamp main body 5 on the first layer and the armour clamp main body 6 on the second layer are limited to the directions of six freedoms.

Simultaneously, the armour clamp main body 5 on the first layer, the armour clamp main body 6 on the second layer and the armour clamp main body 7 on the third layer are arranged with a plurality of clamping parts (not shown in the figure), these clamping parts are used to clamp the connecting line to position the connecting line.

The present invention also provides an injection mold, which comprises the armour clamp positioning mechanism; when it is used, firstly, the armour clamp is positioned by the positioning mechanism, and after being positioned, the armour clamp positioning mechanism is mounted in a plastic mold to perform an injection molding process, but the clamping parts of the armour clamp does not need to be inj ected.

Wherein, the injection mold futher comprises a plate body assembly 9; the plate body assembly 9 comprises a first plate body 91 and a second plate body 92; the first plate body 91 is an upper mold plate of the mold, the second plate body 92 is a lower mold plate of the mold, and the positioning assembly is arranged on the first plate body 91 and the second plate body 92. The first section 11, the third section 21 and the fifth section 31 are fixed on the first plate body 91 and are fixedly connected with the first plate body 91, so that the first section 11, the third section 21 and the fifth section 31 are fixed conveniently and are also convenient to use. The second section 12, the fourth section 22 and the sixth section 32 are fixed on the second plate body 92 and are fixedly connected with the second plate body 92, so that the second section 12, the fourth section 22 and the sixth section 32 are fixed conveniently and are also convenient to use. Meanwhile, the ejector rod 10 is arranged on the injection mold, and after the armour clamp is positioned, the armour clamp is ejected out, so that the injection molding of the armour clamp main body 5 on the first layer, the armour clamp main body 6 on the second layer and the armour clamp main body 7 on the third layer is completed, and the armour clamp is formed.

Taking an example that the armour clamp has three layers of armour clamp main bodies, when the three layers of armour clamp main bodies are positioned, firstly, the first section 1 of the first positioning assembly 11 is arranged to penetrate through the armour clamp main body 5 on the first layer and the armour clamp main body 6 on the second layer from top to bottom, and the end of the first section 11 is arranged to abut against the top wall of the armour clamp main body 7 on the third layer; then, the second section 12 is arranged to abut against the bottom wall of the armour clamp main body 7 on the third layer; then, the end of the third section 21 of the second positioning assembly 2 is arranged to penetrate through the armour clamp main body 5 on the first layer, and abut against the top wall of the armour clamp main body 6 on the second layer, then the fourth section 22 is arranged to penetrate through the armour clamp main body 7 on the third layer from bottom to top, and the end of the fourth section 22 is arranged to abut against the bottom wall of the armour clamp main body 6 on the second layer; then, the end of the fifth section 31 of the third positioning assembly 3 is arranged to abut against the top wall of the armour clamp main body 5 on the first layer, then, the sixth section 32 is arranged to penetrate through the armour clamp main body 7 on the third layer and the armour clamp main body 6 on the second layer from bottom to top, and the end of the sixth section 32 is arranged to abut against the bottom wall of the armour clamp main body 5 on the first layer for positioning and fixing; finally, the fourth positioning assembly is arranged to penetrate through the armour clamp main body 5 on the first layer, the armour clamp main body 6 on the second layer and the armour clamp main body 7 on the third layer together, so that the armour clamp main body 5 on the first layer and the armour clamp main body 6 on the second layer are limited to the directions of six freedoms.

It should be understood that the above examples are only for clarity of illustration and are not intended to limit the embodiments. Other variations and modifications will be apparent to those skilled in the art in light of the above description. It is not necessary and impossible to list all the embodiments here. And obvious variations or modifications derived from here are still within the protection scope of the present invention.

## Claims

1. An armour clamp positioning mechanism for positioning an armour clamp that comprises at least two layers of armour clamp main bodies arranged at intervals,
**characterized in** comprising:
at least three positioning assemblies, comprising a first positioning assembly (1), a second positioning assembly (2), and a third positioning assembly (3);
wherein, the first positioning assembly (1) comprises a first section (11) and a second section (12); the first section (11) is arranged to penetrate through the armour clamp main body (5) on the first layer and abut against a top wall of the armour clamp main body (6) on the second layer, and the second section (12) is arranged to abut against a bottom wall of the armour clamp main body (6) on the second layer;
the second positioning assembly (2) comprises a third section (21) and a fourth section (22); the third section (21) is arranged to abut against a top wall of the armour clamp main body (5) on the first layer, and the fourth section (22) is arranged to penetrate through the armour clamp main body (6) on the second layer and abut against a bottom wall of the armour clamp main body (5) on the first layer; and
the third positioning assembly (3) is arranged to penetrate through the armour clamp main body (5) on the first layer and the armour clamp main body (6) on the second layer.

2. The armour clamp positioning mechanism according to claim 1, **characterized in that** the first section (11) and the second section (12) are located on the same axis, and the third section (21) and the fourth section (22) are located on the same axis.

3. The armour clamp positioning mechanism according to claim 2, **characterized in that** a plurality of positioning assemblies are arranged at intervals along a circumferential direction of the armour clamp main bodies.

4. The armour clamp positioning mechanism according to any one of claims 1 to 3, **characterized in that** the three positioning assemblies are in the form of cylinder.

5. The armour clamp positioning mechanism according to claim 4, **characterized in that** the cylinder comprises:
a body (8) arranged on a plate body assembly (9);
an insertion part (81) arranged at one end of the body (8) far away from the plate body assembly, and the insertion part (81) has a diameter less than that of the body (8).

6. The armour clamp positioning mechanism according to claim 5, **characterized in that** an end of the insertion part (81) is arranged with a chamfer.

7. The armour clamp positioning mechanism according to any one of claims 1 to 6, **characterized in that** the armour clamp further comprises an armour clamp main body (7) on a third layer;
the armour clamp positioning mechanism comprises four positioning assemblies, the third positioning assembly (3) comprises a fifth section (31) and a sixth section (32), the fifth section (31) is arranged to abut against the top wall of the armour clamp main body (5) on the first layer , the sixth section (32) is arranged to penetrate through the armour clamp main body (6) on the second layer and the armour clamp main body (7) on the third layer and abut against the bottom wall of the armour clamp main body (5) on the first layer ;
a fourth positioning assembly (4) is arranged to penetrate through the armour clamp main body (5) on the first layer, the armour clamp main body (6) on the second layer and the armour clamp main body (7) on the third layer.

8. An injection mold, comprising the armour clamp positioning mechanism of any one of claims 1 to 7.

9. An injection mold according to claim 8, **characterized in** further comprising a plate body assembly (9) that comprises:
a first plate body (91), having a first section (11), a third section (21) and a fifth section (31) arranged thereon and fixedly connected thereto;
a second plate body (92), having a second section (12), a fourth section (22) and a sixth section (32) arranged thereon and fixedly connected thereto.
